# FASCICULE DE BREVET EUROPEEN

(11) **EP 1 165 668 B1**
(45) Date de publication et mention de la délivrance du brevet: **18.01.2006**
(21) Numéro de dépôt: 01916967.1
(22) Date de dépôt: 31.01.2001
(51) Int. Cl.: C08J 5/06, C09J 161/12

(54) **COMPOSITION ADHESIVE POUR L'ADHESION TEXTILE/CAOUTCHOUC**
KLEBSTOFFZUSAMMENSETZUNG FÜR TEXTIL-GUMMI-ADHÄSION
ADHESIVE COMPOSITION FOR TEXTILE/RUBBER ADHESION

(30) Priorité: 03.02.2000 FR 0001398
(43) Date de publication de la demande: 02.01.2002
(73) Titulaire: Société de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: JOSEPH, Aurélie, F-63400 Chamalières (FR); CHASSAGNY, Michelle, F-63870 Orcines (FR); ROUX, Marius, F-63118 Cebazat (FR)
(74) Mandataire: Hiebel, Robert
(86) Numéro de dépôt international: PCT/EP2001/000993
(87) Numéro de publication internationale: WO 2001/057116

(56) Documents cités:
- DATABASE CHEMABS [en ligne] CHEMICAL ABSTRACTS SERVICE, COLUMBUS, OHIO, EUA, retiré de STN; Numéro d'accès 104:150593, XP002149188 & JP 60 199982 A (UNITIKA LTD) 9 octobre 1985 (1985-10-09)
- DATABASE CHEMABS [en ligne] CHEMICAL ABSTRACTS SERVICE, COLUMBUS, OHIO, EUA, retiré de STN; Numéro d'accès 104:20584, XP002149189 & DATABASE WPI Week 8536 Derwent Publications Ltd., London, GB; AN 1985-219606 & JP 60 139876 A (TORAY IND INC ET AL.), 24 juillet 1985 (1985-07-24)

## Description

La présente invention concerne une composition adhésive utilisable pour faire adhérer des fibres textiles à une composition de caoutchouc réticulable, des fibres textiles encollées au moyen de ladite composition adhésive, un composite constitué desdites fibres textiles encollées et d'une composition de caoutchouc à l'état réticulé qui est perméable à la lumière, et une enveloppe de pneumatique dont les flancs comprennent ledit composite.

La coloration de câblés textiles en vue de leur visualisation à travers les flancs de pneumatique, notamment pour bicyclette, est bien connue. On cherche de cette manière à rehausser l'aspect des flancs en exposant à la vue la structure des câblés textiles qui sont prévus radialement à l'intérieur d'une composition de caoutchouc réticulée qui est transparente ou translucide, de sorte que l'on peut voir lesdits câblés à travers ladite composition de caoutchouc.

On peut par exemple citer le document de brevet anglais GB-A-460 557, qui divulgue un pneumatique pour bicyclette comportant, sur une nappe textile, une solution de caoutchouc liquide comprenant un agent colorant (colonne 1, lignes 23-37) et, appliquée sur cette solution, une couche transparente de caoutchouc.
On peut également citer le document de brevet international WO-A-88/3 483, qui divulgue un pneumatique pour bicyclette dont les flancs comportent une nappe textile qui est enduite d'un élastomère transparent. Cette nappe textile présente un coloris définissant une couleur de fond pour lesdits flancs. De plus, des motifs décoratifs dont la ou les couleurs diffèrent de celle de ladite nappe textile sont incorporés à celle-ci.

Pour faire adhérer une fibre textile à une composition de caoutchouc réticulable, on procède de manière connue à une immersion de ladite fibre dans un bain d'encollage, puis on soumet la fibre encollée à un séchage suivi d'un traitement thermique approprié. Avant d'immerger la fibre dans le bain d'encollage, on procède parfois à une immersion préalable de celle-ci dans un bain à base de résine époxy, afin d'améliorer la qualité de la liaison ultérieure entre ladite fibre encollée et la composition de caoutchouc à l'état réticulé.
Le bain d'encollage est généralement constitué d'une colle phénolique thermodurcissable aqueuse comprenant au moins un élastomère diénique. Pour le collage de compositions de caoutchouc sur des câblés textiles, tels que ceux usuellement utilisés dans les pneumatiques, on utilise le plus souvent une colle connue sous le nom de « colle RFL » (résorcinol formaldéhyde latex).
Cette colle RFL est essentiellement constituée, d'une part, d'une résine phénolique thermodurcissable aqueuse et, d'autre part, d'une matrice élastomère.
Plus précisément, cette résine phénolique thermodurcissable comprend, en phase aqueuse, du résorcinol (ou un précondensat résorcinol/formol), du formol et de la soude.
Quant à ladite matrice élastomère, elle est constituée d'un ou de plusieurs élastomères diéniques, tels que du caoutchouc naturel éventuellement coupé avec un copolymère de styrène et de butadiène, et/ou un terpolymère de vinylpyridine, de styrène et de butadiène.
On ajoute également de l'ammoniac ou de la soude pour l'obtention de ladite colle RFL. Dans certains cas, cette colle peut en outre contenir des isocyanates bloqués.

L'expérience montre que la résine phénolique précitée confère à cette colle une adhésion satisfaisante entre les câblés de fibres textiles et la composition de caoutchouc réticulable.
Cependant, un inconvénient de cette colle de type RFL apparaît lorsqu'elle a été utilisée pour solidariser des câblés de fibres textiles avec une composition de caoutchouc réticulée perméable à la lumière, de sorte à pouvoir visualiser lesdits câblés à travers cette composition de caoutchouc.
En effet, les colles de type RFL sont notamment caractérisées par des couleurs de type rouge ou orange-rouge, qui leur sont conférées par lesdites résines phénoliques thermodurcissables. Or, il se trouve que ces couleurs ou nuances de couleurs ne sont pas toujours souhaitables, d'un point de vue esthétique, pour une exposition favorable à la vue des câblés textiles au sein des flancs.

Le document de brevet japonais JP-A-60/199 982 présente un procédé pour le traitement d'encollage et de coloration de câblés textiles qui a pour but de conférer aux câblés encollés des teintes claires, à la place des couleurs foncées inhérentes aux colles RFL, ainsi qu'une adhésion satisfaisante à une composition de caoutchouc qui est choisie sensiblement transparente, de sorte à exposer à la vue les câblés colorés.
On prépare dans un premier temps une solution d'encollage et de coloration, en mélangeant sous agitation lente:
- 100 parties en poids d'une dispersion aqueuse de latex et d'un produit de condensation de résorcine-formaldéhyde (RFL), à
- une solution contenant de 10 à 50 parties en poids d'un composé de type éthylène-urée (plus précisément le 4,4'-diphénylméthanebiséthylène-urée),

puis en ajoutant au mélange ainsi obtenu un colorant non aqueux, selon une quantité allant de 3 à 30 parties en poids, toujours sous agitation.

On plonge ensuite les câblés textiles dans la solution d'encollage et de coloration ainsi obtenue, on sèche les câblés encollés et on les soumet à un traitement thermique spécifique à une température qui est fonction de la quantité dudit composé éthylène-urée qui a été utilisée dans la solution d'encollage et de coloration.
On notera que la présence de ce composé éthylène-urée dans cette solution est indispensable pour conférer une couleur claire aux câblés et une adhésion satisfaisante à la composition de caoutchouc qui est solidarisée avec ces câblés, la seule présence du pigment pur dans cette solution ne permettant pas l'obtention de cette couleur claire (c'est-à-dire autre que la couleur rouge, orange-rouge, voire brune-rouge de la colle RFL).
Un inconvénient majeur de ce procédé d'encollage et de coloration réside dans le surcoût opératoire qui est engendré par l'utilisation de ce composé additionnel de type éthylène-urée.

Le document de brevet japonais JP-A-60/139 876 présente un procédé d'encollage et de coloration de câblés textiles, en vue de les faire adhérer à une composition de caoutchouc sensiblement transparente, qui consiste également à mélanger un colorant non aqueux à une solution d'encollage de type RFL et à utiliser, à titre d'agent promoteur d'adhésion avec cette composition de caoutchouc, un polyisocyanate séquencé.

Le but de la présente invention est de remédier à l'inconvénient précité en relation l'utilisation d'un composé éthylène-urée pour éclaircir la couleur de la colle RFL sans pénaliser l'adhésion, et il est atteint en ce que la demanderesse vient de découvrir de façon surprenante que l'utilisation, dans une composition adhésive utilisable pour faire adhérer des fibres textiles à une composition de caoutchouc réticulable, d'une dispersion pigmentaire aqueuse comprenant au moins un pigment organique, ladite composition adhésive étant le produit du mélange de ladite dispersion pigmentaire aqueuse et d'une colle phénolique thermodurcissable aqueuse comprenant au moins un élastomère diénique,
permet de conférer à ladite composition adhésive une couleur claire qui est différente des couleurs rouge ou orange-rouge propres aux résines formophénoliques thermodurcissables, telles que la résine RFL, et ne pénalise pas l'adhésion entre lesdites fibres textiles et ladite composition de caoutchouc réticulable.

On notera que la présence de ce pigment sous forme de dispersion aqueuse permet de se passer d'un composé additionnel pour l'obtention de la couleur claire recherchée, ladite composition adhésive étant dépourvue de composé éthylène-urée, et que cette dispersion pigmentaire aqueuse ne pénalise pas le pouvoir d'adhésion de la colle phénolique thermodurcissable.
On notera également que les pigments organiques utilisables dans la composition adhésive selon l'invention présentent en commun des éléments structurels qui confèrent à cette composition adhésive une coloration durable, notamment suite à la vulcanisation par le soufre de ladite composition de caoutchouc et de ladite composition adhésive. A titre non limitatif, ces éléments structurels communs sont constitués, d'une part, d'au moins un groupe chromophore, tel qu'un radical C=C, C=N, N=N, N=O, C=O, des cycles benzéniques ou des hétérocycles et, d'autre part, d'au moins un groupe auxochrome, tel qu'un radical OH, NH₂,NO₂, CH₃, Cl, Br, ou un groupe SO₃Na.

Additionnellement, la couleur que ladite dispersion pigmentaire aqueuse confère à la composition adhésive selon l'invention est de préférence caractérisée dans le domaine visible par une longueur d'onde inférieure (i.e une fréquence supérieure) à celle de la couleur de ladite résine.

La fraction massique de pigment qui est utilisable dans ladite composition adhésive de sorte à ne pas pénaliser l'adhésion peut varier en fonction de la nature dudit pigment. Cette fraction massique est de préférence inférieure ou égale à 1 %.

Selon un exemple particulièrement avantageux de réalisation de l'invention, ledit pigment appartient au groupe constitué par les phtalocyanines et les diarylides.
A titre de pigment appartenant à la famille des phtalocyanines, on utilise par exemple une phtalocyanine de cuivre.
Un tel pigment peut présenter des couleurs sensiblement vertes ou bleues, et il peut par exemple conférer à la composition adhésive l'incorporant des couleurs variant du vert au bleu, avec une pluralité de nuances possibles, telles que des nuances vert-gris ou vert-bleu.
A titre de pigment appartenant à la famille des diarylides, on utilise par exemple la diarylide-m-xylidide.
Un tel pigment présente une couleur sensiblement jaune, et il peut par exemple conférer à la composition adhésive l'incorporant des nuances de couleurs de type orange-jaune.

Le procédé de préparation selon l'invention de ladite composition adhésive consiste essentiellement à mélanger ladite colle phénolique thermodurcissable aqueuse comprenant au moins un élastomère diénique à une dispersion pigmentaire aqueuse comprenant ledit pigment organique.
Selon une autre caractéristique de l'invention, ce procédé consiste à utiliser, à titre de dispersion pigmentaire aqueuse, une dispersion comprenant ledit pigment selon une fraction massique inférieure ou égale à 10 %.
Additionnellement, ladite dispersion pigmentaire aqueuse est introduite dans ladite composition adhésive selon une fraction massique inférieure ou égale à 15 %. De plus, ladite dispersion pigmentaire aqueuse comprend de l'eau selon une fraction massique comprise entre 40 % et 60 %.

On notera qu'une composition adhésive selon l'invention pourrait comprendre une colle phénolique thermodurcissable autre que la colle RFL, et que cette colle phénolique thermodurcissable pourrait comprendre d'autres élastomères diéniques que la vinylpyridine, un copolymère de styrène et de butadiène et du caoutchouc naturel,

Une fibre textile encollée selon l'invention est telle qu'elle est revêtue d'une composition adhésive telle que celle précitée.
On notera que ladite fibre textile peut être par exemple constituée de fibres en polyamide, tel que le Nylon@ ou l'aramide, ou en polyester, tel que le polyéthylène téréphtalate (PET), ou encore en un matériau cellulosique, tel que la rayonne.

Un composite selon l'invention est constitué d'une composition de caoutchouc à l'état réticulé qui est perméable à la lumière visible (i.e transparente ou translucide) et qui est solidarisée avec des fibres textiles, et ledit composite est tel qu'il comporte une composition adhésive telle que celle précitée entre ladite composition de caoutchouc et lesdites fibres textiles.
Selon un exemple de réalisation de composite selon l'invention, ladite composition de caoutchouc est à base d'un coupage de caoutchouc naturel et d'au moins un autre élastomère diénique, de telle manière que ledit caoutchouc naturel soit présent à titre majoritaire dans ledit coupage, et elle peut comprendre dans ce cas une charge renforçante à base de noir de carbone.
Par élastomère diénique, on entend de manière connue un élastomère issu au moins en partie (i.e. un homopolymère ou un copolymère) de monomères diènes (monomères porteurs de deux doubles liaisons carbone-carbone, conjuguées ou non). De préférence, cet élastomère diénique est essentiellement insaturé, c'est-à-dire qu'il est issu au moins en partie de monomères diènes conjugués, ayant un taux de motifs ou unités d'origine diénique (diènes conjugués) qui est supérieur à 15 % (% en moles).

Une enveloppe de pneumatique selon l'invention est telle qu'elle comporte des flancs comprenant ledit composite.

Avantageusement, il s'agit d'une enveloppe de pneumatique pour véhicule à deux roues, tel qu'une bicyclette. On notera alors que la composition adhésive de l'invention, prévue entre ladite composition de caoutchouc perméable à la lumière et lesdites fibres textiles, usuellement assemblées sous forme de câblés, permet d'exposer à la vue lesdits câblés en leur conférant des couleurs ou des nuances de couleurs qui sont particulièrement recherchées pour leur aspect esthétique (par exemple de la nuance orange-jaune à la couleur bleue dans le spectre de la lumière visible, en passant par le vert).

Les caractéristiques précitées de la présente invention, ainsi que d'autres, seront mieux comprises à la lecture de la description suivante de plusieurs exemples de réalisation de l'invention, donnés à titre illustratif et non limitatif.

On a préparé et testé trois séries de compositions adhésives aqueuses selon l'invention.
Les compositions adhésives de chacune de ces séries comprennent une même colle phénolique thermodurcissable aqueuse, qui est du type colle RFL. Cette colle a été obtenue, d'une manière connue, à partir d'une résine à base de résorcinol (en abrégé « résine » dans la suite de la présente description).
La formulation de cette colle est la suivante:

| | | |
|---|---|---|
| Colle: | vinylpyridine (VP) | 10 g |
| | copolymère styrène/ butadiène (SBR) | 8 g |
| | caoutchouc naturel (NR) | 5 g |
| | ammoniaque | 1,5 g |
| | résine | 16 g |
| | eau | 59,5 g, |
| | | |
| dont résine: | résorcinol | 9 g |
| | soude à 49 % | 0,5 g |
| | formol à 31% | 16,5 g |
| | eau | 74 g. |

Cette colle a été préparée avec, pour l'étape de résinification, une durée de 4 heures et, pour l'étape de mûrissement de la colle, une durée de 12 heures.

Les compositions adhésives de la première série d'essais selon l'invention comprennent, outre ladite colle, une dispersion pigmentaire aqueuse commercialisée par la société ZENECA sous la dénomination « VERT MONASTRAL GNE HD PÂTE». Cette dispersion est caractérisée par une fraction massique de matière sèche de 49,5 %, et elle comporte un pigment appartenant à la famille des phtalocyanines de cuivre saturés en chlore, avec 14 atomes de chlore par molécule. Plus précisément, ce pigment est présent dans ladite dispersion selon une fraction massique de 2,3 %.
Les compositions adhésives de la seconde série d'essais selon l'invention comprennent, outre ladite colle, une dispersion pigmentaire aqueuse commercialisée par la société CIBA Spécialités Chimiques S.A sous la dénomination « BLEU UNISPERSE B-PI ». Cette dispersion est caractérisée par une fraction massique de matière sèche de 49,5 %, et elle comporte un pigment appartenant à la famille des alphaphtalocyanines de cuivre. Plus précisément, ce pigment est présent dans ladite dispersion selon une fraction massique de 6,3%.
Les compositions adhésives de la troisième série d'essais selon l'invention comprennent, outre ladite colle, une dispersion pigmentaire aqueuse commercialisée par la société CIBA Spécialités Chimiques S.A sous la dénomination « JAUNE UNISPERSE B-PI, C. I. Pigment Yellow 13- 21100 ». Cette dispersion est caractérisée par une fraction massique de matière sèche de 49,5 %, et elle comporte un pigment appartenant à la famille des diarylides, qui est le diarylide m-xylidide. Plus précisément, ce pigment est présent dans ladite dispersion selon une fraction massique de 0,7 %.
Les compositions adhésives de chacune de ces séries d'essais diffèrent les unes des autres uniquement par la quantité de dispersion pigmentaire aqueuse qu'elles comportent (i.e. par les fractions massiques des dispersions pigmentaires aqueuses dans les compositions adhésives correspondantes).

Concernant les fibres utilisées pour chacune desdites séries d'essais qui sont destinées à être encollées au moyen des compositions adhésives correspondantes, on a utilisé :
- pour la première et la troisième séries selon l'invention, des câblés constitués de fibres de polyamide 6-6 qui sont commercialisées sous la dénomination « 140/2 T728 » par la société DUPONT,
- pour la seconde série selon l'invention, des câblés constitués de fibres de polyamide 6-6 qui sont commercialisées sous la dénomination « 47/1 Z220-NT120 » par la société SOVOUTRI.
   On a procédé à l'encollage des câblés de chacune desdites séries en les immergeant dans un bain d'encollage constitué de la composition adhésive correspondante, puis on a procédé à un séchage et à un traitement thermique des câblés ainsi encollés. On a mis en oeuvre l'étape de séchage pour chaque série d'essais à une température de 220° C et pendant une durée de 15 secondes. Quant à l'étape de traitement thermique, on l'a également mise en oeuvre à une température de 220° C et pendant une durée de 15 secondes, cela également pour chaque série d'essais.

Pour chacune des séries d'essais, on a ensuite intégré chaque variante de câblé ainsi encollé, séché et traité thermiquement dans une composition de caoutchouc réticulable en vue de déterminer, suite à la vulcanisation de cette composition, les forces d'arrachement nécessaires pour extraire chaque câblé de cette composition.
La formulation de cette composition est exprimée dans le tableau 1 ci-après:
(exprimées en pce, parties en poids pour cent parties d'élastomère(s) :

**TABLEAU 1:**

| composition | pce |
|---|---|
| caoutchouc naturel | 55 |
| polybutadiène | 20 |
| copolymère styrène/ butadiène | 25 |
| noir de carbone | 42 |
| oxyde de zinc | 3 |
| acide stéarique | 1 |
| résine tackifiante | 2 |
| agent antioxydant | 1.4 |
| huile | 15 |
| soufre | 2 |
| accélérateur vulcanisation | 0.9 |

On a mesuré les forces d'arrachement précitées d'après un test d'adhésion qui est décrit dans le document de brevet international WO-A-92/12285, pages 8 et 9.
L'éprouvette de mesure comprend 12 boucles encastrées aux deux extrémités dans un bloc de caoutchouc vulcanisé constitué de ladite composition de caoutchouc à l'état réticulé. Cette éprouvette est confectionnée dans un moule et elle est vulcanisée pendant 15 minutes à 160° C, sous une pression de 15. 10⁻⁵ Pa. On mesure la force axiale à 20° C qui est nécessaire pour extraire chaque câblé de ladite composition de caoutchouc.
Les résultats d'adhésion seront présentés dans les trois tableaux 2 à 4 ci-après, qui concernent respectivement les trois séries précitées d'essais.
On a par ailleurs procédé à des mesures colorimétriques pour les compositions adhésives de chaque série d'essais, avec un spectrocolorimètre «Dataflash 100» commercialisé par la société Datacolor. On a utilisé un illuminant « D65 », un observateur selon un angle de 10°, une géométrie « d/8 » et un système de coordonnées « CIELAB ».

Les résultats colorimétriques, qui incluent des valeurs représentatives de la luminosité moyenne (L*moyen) et des axes de couleurs (a*moyen et b*moyen) sont également présentés dans les tableaux 2 à 4 suivants.

**TABLEAU 2: première série de sept essais 1b à 1h selon l'invention, en comparaison d'un essai « témoin » 1a:**

| compositions adhésives | 1a | 1b | 1c | 1d | 1e | 1f | 1g | 1h |
|---|---|---|---|---|---|---|---|---|
| VP (g) | 10 | 10 | 10 | 10 | 10 | 10 | 10 | 10 |
| SBR (g) | 8 | 8 | 8 | 8 | 8 | 8 | 8 | 8 |
| NR (g) | 5 | 5 | 5 | 5 | 5 | 5 | 5 | 5 |
| ammoniaque (g) | 1.5 | 1.5 | 1.5 | 1,5 | 1,5 | 1,5 | 1,5 | 1,5 |
| résine (g) | 16 | 16 | 16 | 16 | 16 | 16 | 16 | 16 |
| eau (g) | 59,5 | 59,5 | 59,5 | 59,5 | 59,5 | 59,5 | 59,5 | 59,5 |
| dispersion pigmentaire «Vert Monastral» (g) | 0 | 0,2 | 0,4 | 0,8 | 1,2 | 1,6 | 2 | 4 |
| pigment pur (g) | 0 | 0,0046 | 0,0092 | 0,0184 | 0,0276 | 0,0368 | 0,046 | 0,092 |
| adhésion câblés à 20°C (N/brin) | 71 | 69 | 75 | 75 | 74 | 78 | 72 | 68 |
| couleur comp. adhésive | orange | verdâtre | vert | vert | vert | vert | vert | vert |
| L* moyen | 43,8 | 38,1 | 36,6 | 32,9 | 30,9 | 30,1 | 29,5 | 27,3 |
| a* moyen | 23,3 | 3,3 | -4,6 | -10,5 | -12,8 | -14,1 | -15,3 | -16,2 |
| b* moyen | 26,8 | 16,8 | 14,1 | 10,6 | 8,8 | 7,9 | 7,1 | 4,8 |

On notera que la couleur des compositions adhésives testées évolue sensiblement de l'orange au vert, sans pénaliser l'adhésion câblés encollés/ composition de caoutchouc réticulée (par rapport à l'essai « témoin » la, sans la dispersion).

**TABLEAU 3: seconde série de sept essais 2b à 2h selon l'invention, en comparaison d'un essai « témoin » 2a:**

| compositions adhésives | 2a | 2b | 2c | 2d | 2e | 2f | 2g | 2h |
|---|---|---|---|---|---|---|---|---|
| VP (g) | 10 | 10 | 10 | 10 | 10 | 10 | 10 | 10 |
| SBR (g) | 8 | 8 | 8 | 8 | 8 | 8 | 8 | 8 |
| NR (g) | 5 | 5 | 5 | 5 | 5 | 5 | 5 | 5 |
| ammoniaque (g) | 1,5 | 1,5 | 1,5 | 1,5 | 1,5 | 1,5 | 1,5 | 1,5 |
| résine (g) | 16 | 16 | 16 | 16 | 16 | 16 | 16 | 16 |
| eau (g) | 59,5 | 59,5 | 59,5 | 59,5 | 59,5 | 59,5 | 59,5 | 59,5 |
| dispersion pigmentaire «Bleu Unisperse» (g) | 0 | 0,4 | 0,8 | 1,6 | 2,0 | 4,0 | 8,0 | 12 |
| pigment pur (g) | 0 | 0,0252 | 0,0504 | 0,10 | 0,126 | 0,252 | 0,504 | 0,756 |
| adhésion câblés à 20°C (N/brin) | 24 | 25 | 25 | 25 | 24 | 24 | 24 | 21 |
| couleur comp. adhésive | rouge | vert-gris | vert-gris | vert-bleu | vert-bleu | vert-bleu | vert-bleu | vert-bleu |
| L* moyen | 50,3 | 38,2 | 36,3 | 33,1 | 33 | 25,4 | 22,8 | 21,3 |
| a* moyen | 19,7 | -0,1 | -3,7 | -7,9 | -8,7 | -8,7 | -5,3 | -2,7 |
| b* moyen | 23,5 | 6,4 | 1,9 | -4,8 | -6,4 | -11,1 | -14 | -14,4 |

On notera que la couleur des compositions adhésives testées évolue sensiblement du rouge au vert-bleu, sans pénaliser l'adhésion câblés encollés/ composition de caoutchouc réticulée (par rapport à l'essai « témoin » 2a sans la dispersion).

**TABLEAU 4: troisième série de quatre essais 3b à 3e selon l'invention, en comparaison d'un essai « témoin » 3a:**

| compositions adhésives | 3a | 3b | 3c | 3d | 3e |
|---|---|---|---|---|---|
| VP (g) | 10 | 10 | 10 | 10 | 10 |
| SBR (g) | 8 | 8 | 8 | 8 | 8 |
| NR (g) | 5 | 5 | 5 | 5 | 5 |
| ammoniaque (g) | 1,5 | 1,5 | 1,5 | 1,5 | 1,5 |
| résine (g) | 16 | 16 | 16 | 16 | 16 |
| eau (g) | 59,5 | 59,5 | 59,5 | 59,5 | 59,5 |
| dispersion pigmentaire «Jaune Unisperse» (g) | 0 | 1 | 2 | 4 | 8 |
| pigment pur (g) | 0 | 0,007 | 0,014 | 0,028 | 0,056 |
| adhésion câblés à 20°C (N/brin) | 80 | 78 | 78 | 79 | 76 |
| couleur comp. adhésive | orange | orange | orange | orange- jaune | orange-jaune |
| L* moyen | 44,2 | 46,4 | 46,9 | 46 | 46,3 |
| a* moyen | 23,8 | 23,8 | 24,1 | 25 | 25,1 |
| b* moyen | 25,1 | 36,1 | 35,7 | 42 | 44,1 |

On notera que la couleur des compositions adhésives testées évolue sensiblement de l'orange à l'orange-jaune, sans pénaliser l'adhésion câblés encollés/ composition de caoutchouc réticulée (par rapport à l'essai « témoin » 3a sans la dispersion).

## Revendications

1. Composition adhésive utilisable pour faire adhérer des fibres textiles à une composition de caoutchouc réticulable, ladite composition adhésive comprenant, d'une part, une colle phénolique thermodurcissable aqueuse comprenant au moins un élastomère diénique et, d'autre part, au moins un pigment organique, **caractérisée en ce que** ladite composition est le produit du mélange de ladite colle phénolique thermodurcissable aqueuse et d'une dispersion pigmentaire aqueuse comprenant ledit pigment organique, la fraction massique de ce pigment dans ladite composition adhésive étant inférieure ou égale à 1 %.

2. Composition adhésive selon la revendication 1, **caractérisée en ce que** ledit pigment appartient au groupe constitué par les phtalocyanines et les diarylides.

3. Composition adhésive selon une des revendications précédentes, **caractérisée en ce qu'**elle est dépourvue de composé éthylène-urée.

4. Procédé de préparation d'une composition adhésive selon une des revendications précédentes, ledit procédé consistant essentiellement à mélanger ladite colle phénolique thermodurcissable aqueuse audit pigment organique, **caractérisé en ce qu'**il consiste à mélanger ladite colle phénolique thermodurcissable à une dispersion pigmentaire aqueuse comprenant ledit pigment organique.

5. Procédé de préparation d'une composition adhésive selon la revendication 4, **caractérisé en ce qu'**il consiste à utiliser, à titre de dispersion pigmentaire aqueuse, une dispersion comprenant ledit pigment organique selon une fraction massique inférieure ou égale à 10 %.

6. Fibres textiles encollées, **caractérisées en ce qu'**elles sont revêtues d'une composition adhésive selon une des revendications 1 à 3.

7. Composite constitué d'une composition de caoutchouc à l'état réticulé qui est perméable à la lumière visible et qui est solidarisée avec des fibres textiles, **caractérisé en ce qu'**il comporte une composition adhésive selon une des revendications 1 à 3 entre ladite composition de caoutchouc et lesdites fibres textiles.

8. Composite selon la revendication 7, **caractérisé en ce que** ladite composition de caoutchouc est à base d'un coupage de caoutchouc naturel et d'au moins un autre élastomère diénique, de telle manière que ledit caoutchouc naturel soit présent à titre majoritaire dans ledit coupage.

9. Enveloppe de pneumatique, **caractérisée en ce qu'**elle comporte des flancs comprenant un composite selon une des revendications 7 ou 8.

10. Enveloppe de pneumatique selon la revendication 9, **caractérisée en ce qu'**elle est prévue pour équiper un véhicule deux roues.

## Claims

1. Adhesive composition that can be used to bond textile fibres adhesively to a cross-linkable rubber composition, the said adhesive composition comprising on the one hand an aqueous thermosetting phenolic adhesive containing at least one diene elastomer, and on the other hand at least one organic pigment,
**characterised in that**
the said composition is the product of mixing the said aqueous thermosetting phenolic adhesive and an aqueous pigmentary dispersion comprising the said organic pigment, the mass fraction of the said pigment in the said adhesive composition being less than or equal to 1%.

2. Adhesive composition according to Claim 1,
**characterised in that**
the said pigment belongs to a group consisting of the phthalocyanines and the diarylides.

3. Adhesive composition according to any of the preceding claims,
**characterised in that**
it contains no ethylene-urea compound.

4. Process for the preparation of an adhesive composition according to any of the preceding claims, the said process consisting essentially in mixing the said aqueous thermosetting phenolic adhesive with the said organic pigment,
**characterised in that**
it consists in mixing the said thermosetting phenolic adhesive with an aqueous pigmentary dispersion containing the said organic pigment.

5. Process for the preparation of an adhesive composition according to Claim 4,
**characterised in that**
it consists in using as the aqueous pigmentary dispersion a dispersion containing the said organic pigment in a mass fraction less than or equal to 10%.

6. Sized textile fibres,
**characterised in that**
they are coated with an adhesive composition according to any of Claims 1 to 3.

7. Composite consisting of a rubber composition in the cross-linked condition which is permeable to visible light and is bonded to textile fibres,
**characterised in that**
it comprises an adhesive composition according to any of Claims 1 to 3 between the said rubber composition and the said textile fibres.

8. Composite according to Claim 7,
**characterised in that**
the said rubber composition is based on a blend of natural rubber and at least one other diene elastomer, such that the said natural rubber is present in a majority proportion in the said blend.

9. Tyre body,
**characterised in that**
it comprises sidewalls consisting of a composite according to either of Claims 7 or 8.

10. Tyre body according to Claim 9,
**characterised in that**
it is intended for fitting to a two-wheeled vehicle.

## Patentansprüche

1. Adhäsive Zusammensetzung, die dazu verwendet werden kann, um textile Fasern an einer vernetzbaren Kautschukmischung anhaften zu lassen, wobei die adhäsive Zusammensetzung einerseits einen wärmehärtbaren wässerigen Klebstoff auf Phenolbasis, der mindestens ein Dienelastomer enthält, und andererseits mindestens ein organisches Pigment umfasst, **dadurch gekennzeichnet, dass** die Zusammensetzung durch Mischen des wärmehärtbaren wässerigen Klebstoffs auf Phenolbasis und einer wässerigen Pigmentdispersion gebildet wird, die das organische Pigment enthält, wobei der Masseanteil des Pigments in der adhäsiven Zusammensetzung 1 % beträgt oder darunter liegt.

2. Adhäsive Zusammensetzung nach Anspruch 1, **dadurch gekennzeichnet, dass** das Pigment aus der Gruppe der Phthalocyanine und Diarylide stammt.

3. Adhäsive Zusammensetzung nach einem der vorhergehenden Ansprüche, **dadurch gekennzeichnet, dass** sie keine EthylenHarnstoff-Verbindung enthält.

4. Verfahren zur Herstellung einer adhäsiven Zusammensetzung nach einem der vorhergehenden Ansprüche, wobei das Verfahren im Wesentlichen darin besteht, den wärmehärtbaren wässerigen Klebstoff auf Phenolbasis mit dem organischen Pigment zu vermischen, **dadurch gekennzeichnet, dass** es darin besteht, den wärmehärtbaren Klebstoff auf Phenolbasis mit einer wässerigen Pigmentdispersion zu vermischen, die das organische Pigment enthält.

5. Verfahren zur Herstellung einer adhäsiven Zusammensetzung nach Anspruch 4, **dadurch gekennzeichnet, dass** es darin besteht, als wässerige Pigmentdispersion eine Dispersion zu verwenden, die das organische Pigment in einem Masseanteil von höchstens 10 % enthält.

6. Verklebte textile Fasern, **dadurch gekennzeichnet, dass** sie mit einer adhäsiven Zusammensetzung nach einem der Ansprüche 1 bis 3 beschichtet sind.

7. Verbundwerkstoff, der aus einer Kautschukmischung im vernetzten Zustand besteht, die für sichtbares Licht durchlässig ist und die mit textilen Fasern verbunden ist, **dadurch gekennzeichnet, dass** er zwischen der Kautschukmischung und den textilen Fasern eine adhäsive Zusammensetzung nach einem der Ansprüche 1 bis 3 enthält.

8. Verbundwerkstoff nach Anspruch 7, **dadurch gekennzeichnet, dass** die Kautschukmischung auf einem Verschnitt aus Naturkautschuk und mindestens einem weiteren Dienelastomer basiert, wobei der Naturkautschuk in dem Verschnitt in einem überwiegenden Anteil enthalten ist.

9. Luftreifen, **dadurch gekennzeichnet, dass** er Flanken umfasst, die einen Verbundwerkstoff nach einem der Ansprüche 7 oder 8 enthalten.

10. Luftreifen nach Anspruch 9, **dadurch gekennzeichnet, dass** er dazu vorgesehen ist, Zweiradfahrzeuge auszustatten.
